# EUROPÄISCHE PATENTSCHRIFT

(11) **EP 3 312 056 B1**
(45) Veröffentlichungstag und Bekanntmachung des Hinweises auf die Patenterteilung: **09.12.2020**
(21) Anmeldenummer: 17194922.5
(22) Anmeldetag: 05.10.2017
(51) Int. Cl.: B60R 16/02, H02G 3/04

(54) **TECHNIK ZUR LEITUNGSFÜHRUNG IN EINEM NUTZFAHRZEUG**
TECHNIQUE FOR LONGITUDINAL GUIDING IN AN INDUSTRIAL TRUCK
TECHNOLOGIE DE GUIDAGE DE CÂBLES DANS UN VÉHICULE UTILITAIRE

(30) Priorität: 18.10.2016 DE 102016012406
(43) Veröffentlichungstag der Anmeldung: 25.04.2018
(73) Patentinhaber: MAN Truck & Bus SE, 80995 München (DE)
(72) Erfinder: RÜBSAMEN, Susanne, 80687 München (DE); ELBS, Norbert, verstorben (DE); SEYWALD, Gerald, 85716 Unterschleißheim (DE)
(74) Vertreter: v. Bezold & Partner Patentanwälte - PartG mbB

(56) Entgegenhaltungen:
- EP-A1- 2 944 854
- EP-A1- 2 996 214
- EP-A2- 2 987 704
- WO-A1-2015/144227
- DE-A1- 10 060 671
- DE-A1- 19 510 932
- FR-A1- 2 712 831
- FR-A1- 2 987 704
- JP-A- 2009 270 686
- US-A- 5 534 665
- US-B1- 6 168 122
- US-B1- 7 140 578

## Beschreibung

Die Erfindung betrifft eine Technik zur Leitungsführung in einem Nutzfahrzeug. Insbesondere sind eine Vorrichtung zur Leitungsführung und ein die Vorrichtung einsetzendes Montageverfahren beschrieben.

Bisher werden Leitungen, insbesondere Rohre und Kabel, direkt am Rahmen eines Lastkraftwagens oder am Gerippe eines Busses verlegt und zumeist mit Kabelbindern an unterschiedlichen Haltern befestigt. Daraus resultiert eine Vielzahl unsortierter und ungeschützter Leitungsbündel, die mittels einer hohen Varianz an Haltern befestigt ist. Im Servicefall ist es schwer den Verlauf einzelner Leitungen nachzuvollziehen. Ferner können sich Scheuerstellen an den Leitungen ergeben und die Leitungen sind den Umwelteinflüssen ausgesetzt und verschmutzen teilweise stark.

Das Dokument JP 2009 270686 A beschreibt einen Halter zur Verdrahtung und zum Verlegen von Rohren. Ein Verdrahtungselement ist längs eines Bandführungselements angeordnet mittels Bandelementen, die in vorbestimmten Abständen in Längsrichtung jeweils um das Verdrahtungselement und das Bandführungselement gezogen sind.

Das Dokument US 6 168 122 B1 beschreibt eine Kabelschutzvorrichtung zum abgestützten Verlegen von Kabeln und Luftleitungen entlang eines Querträgers eines LKW-Rahmens. Um mögliche Störungen der Kabel und Luftleitungen durch Aggregate unterhalb des Querträgers zu vermeiden, weist die Kabelschutzvorrichtung einen länglichen Kanal mit mindestens einer horizontalen Bodenwand auf, die sich über einen Großteil der Querlänge des Querträgers erstreckt.

Das Dokument US 5 534 665 A beschreibt eine vor Umgebungseinflüssen schützende Kabelbaumumhüllung. Die Kabelbaumumhüllung umfasst einen U-Kanal mit einer Basis und zwei im Wesentlichen parallelen Seitenwänden, in denen ein oder mehrere Kabelbündel aufgenommen werden können. Die Seitenwände weisen gegenüberliegende Aufnahmeschlitze auf, in denen ein Montageelement demontierbar befestigt ist. Das Montageelement dient sowohl zur Montage des U-Kanals als auch zum Halten des Kabelbündels innerhalb des U-Kanals.

Das Dokument DE 100 60 671 A1 betrifft Befestigungsanordnungen für Abzweigsteckverbinder, beispielsweise zum Verkabeln einer großen Anzahl von Kabelsträngen auf einem Verstärkungsrahmen. Zwei bandförmige Elemente sind in Längsrichtung voneinander beabstandet angeordnet. Dazwischen ist ein flacher Schaltkreiskörper angeordnet mit wenigstens einem Abzweigsteckverbinder. Zwei Befestigungsteile stützen den wenigstens einen Abzweigsteckverbinder ab, wobei jedes Befestigungsteil die bandförmigen Elemente brückenartig verbindet. Der wenigstens eine Abzweigsteckverbinder ist in der Längsrichtung an einer vorbestimmten Position des Befestigungsteils befestigbar.

Das Dokument FR 2 987 704 A1 beschreibt eine Stützvorrichtung mit einer Stützfläche, die sich entlang einer Längsrichtung erstreckt zum Verlegen von elektrischen Leitungen. Die Stützvorrichtung umfasst mindestens eine Verlegungsinsel mit einer Wegoberfläche, die oberhalb der Stützfläche angeordnet ist, und mindestens einer trennenden Kante, die aus der Wegoberfläche hervorragt und sich in der Längsrichtung erstreckt, um unterschiedliche elektrische Pfade in der Breite der Wegoberfläche zu begrenzen.

Das Dokument FR 2 712 831 A1 beschreibt ein Herstellungsverfahren für ein Profil aus einem relativ dünnen Blech, das so gefaltet ist, dass es einen flachen Boden aufweist, der von mindestens einem Vertikalflügel rechtwinklig begrenzt wird, worin mindestens ein Fenster vorgesehen ist. Der Rand jedes Fensters weist einen schmalen Rand auf, der mindestens 180° nach außen aus dem Profil gefaltet ist.

Das Dokument WO 2015/144227 A1 beschreibt eine Hybridkabelrinne, deren erster Teil eine erste Stützfläche mit gleichmäßiger Dicke bildet zur Aufnahme mehrerer Kabel. Der erste Teil weist mehrere erste Durchgangsöffnungen auf. Die Kabelrinne weist ferner zwei parallel verlaufende Seitenstege auf, die durch den ersten Teil miteinander verbunden sind. Die Seitenstege umfassen eine Innenseite, die mit dem ersten Teil verbunden ist. Eine Oberkante der Seitenstege ist geschlossen und verbindet die Innenseite mit einer Außenseite der Seitenstege, wobei die Innenseite und die Außenseite ungefähr die gleiche Breite aufweisen. Eine Unterseite der Seitenstege ist offen.

Das Dokument EP 2 996 214 A1 beschreibt einen als Adapter für ein Kabeltragsystem ausgeführten Kabeltragsegmentverbinder. Der Kabeltragsegmentverbinder umfasst einen rechten und einen linken Seitenholm. Jeder Seitenholm ist in Verlaufsrichtung in vier Abschnitte gegliedert. Ein erster Abschnitt ermöglicht als erster Anschlussabschnitt ein mechanisches Anschließen des Kabeltragsegmentverbinders an ein erstes Kabeltragsegment. Ein zweiter Abschnitt ermöglicht als zweiter Anschlussabschnitt ein mechanisches Anschließen des Kabeltragsegmentverbinders an ein zweites Kabeltragsegment. Ein dritter, zwischen den beiden Anschlussabschnitten angeordneter Abschnitt ermöglicht als Tragabschnitt ein Tragen von über den Kabeltragsegmentverbinder geführten Kabeln. Ein vierter, zwischen dem Tragabschnitt und einem der beiden Anschlussabschnitte angeordneter Abschnitt ermöglicht als Einrichteabschnitt ein Anpassen des hierzu benachbarten Anschlussabschnitts an die Anschlussgeometrie des anzuschließenden Kabeltragsegments.

Das Dokument EP 2 944 854 A1 beschreibt einen Kabelleiter mit zwei zueinander beabstandet angeordneten und durch Sprossen miteinander verbundenen Tragholmen. An den Sprossen können Bügelschellen festgesetzt werden. Dazu weisen die Sprossen quer zur Ebene der Kabelleiter eine Montageöffnung mit einem in Längsrichtung der Kabelleiter weisenden Hinterschnitt auf. Jede Sprosse weist ein Sprossenprofil auf, das zwei in der Längsrichtung zueinander beabstandete Träger umfasst. Jede Sprosse ist durch Einsetzen der Bügelschellen beidseitig bestückbar.

Somit ist eine Aufgabe der Erfindung, eine Technik zur Leitungsführung in einem Nutzfahrzeug anzugeben, welche die Anzahl der Montageschritte am Nutzfahrzeug reduziert. Eine alternative oder weitere Aufgabe ist den Schutz der Leitungen zu verbessern.

Diese Aufgabe oder Aufgaben werden durch eine Vorrichtung zur Leitungsführung mit den Merkmalen des Anspruchs 1 und einem Verfahren zur Montage der Vorrichtung mit den Schritten des Anspruchs 15 gelöst.

Gemäß einem Aspekt umfasst eine Vorrichtung zur Leitungsführung für ein Nutzfahrzeug mindestens eine Anlagefläche, an der sich in Längsrichtung erstreckende Leitungen anliegen oder in Anlage bringbar sind, wobei ein Längsmaß der Anlagefläche in der Längsrichtung größer ist als ein Quermaß der Anlagefläche quer zur Längsrichtung, und wobei die Anlagefläche eine Vielzahl von Ausnehmungen aufweist zur Befestigung der Leitungen parallel zur Anlagefläche mittels in eine Teilmenge der Ausnehmungen eingreifender Befestigungselemente. Ferner umfasst die Vorrichtung Verbindungselemente, über welche die Vorrichtung an mehreren Stellen zumindest mit einem Abschnitt eines Rahmens des Nutzfahrzeugs verbunden oder verbindbar ist.

Ausführungsbeispiele der Vorrichtung können im am Rahmen montierten Zustand einen die Leitungen schützenden Leitungsschacht bilden. Die Anlagefläche kann einen vorgesehenen Raum zur Leitungsführung und/oder zur gezielten Befestigung im Fahrzeugrahmen definieren. Nämliche oder weitere Ausführungsbeispiele können die Modularität erhöhen, indem die Leitungsführung in einzelnen Segmenten vormontierbar ist.

Die Ausnehmungen können durch Rasterelemente als Anlagefläche realisiert sein. Die Leitungen können sortiert im Fahrzeug befestigt werden. Durch die Vorrichtung sind die Leitungen im Fahrzeug leicht zugänglich. Im Servicefall kann der Verlauf der Leitungen gezielt und einfach nachvollzogen werden.

Die Vorrichtung kann mit den Leitungen vormontiert werden und in das Fahrzeug in einem verkürzten Montageschritt eingesetzt werden. Die Leitungen können dabei mit den jeweiligen Aggregaten verbunden werden.

Die Vorrichtung kann mehrere in der Längsrichtung nebeneinander angeordnete Anlageflächen umfassen. Jede Anlagefläche kann jeweils einem Segment der Leitungsführung entsprechen. Die Längsrichtung kann im eingebauten Zustand der Vorrichtung mit einer Längsrichtung oder Fahrtrichtung des Nutzfahrzeugs übereinstimmen. Die Vorrichtung kann sich über einen Teil der Länge des Nutzfahrzeugs erstrecken.

Die Anlagefläche kann durch die Verbindungselemente am Rahmen, beispielsweise ortsfest und/oder drehfest bezüglich des Rahmens, angeordnet sein.

Die Eignung der Vielzahl von Ausnehmungen zur Befestigung der Leitungen an einer Teilmenge der Ausnehmungen kann dadurch realisiert sein, dass mehr Ausnehmungen in der Anlagefläche vorhanden sind als zur Befestigung der Leitungen notwendig oder nutzbar sind. Alternativ oder in Kombination kann die Eignung dadurch realisiert sein, dass in jeder Ausnehmung wahlweise kein Befestigungselement, ein Befestigungselement oder mehrere Befestigungselemente eingesetzt werden. Vorzugsweise verläuft die an einer Ausnehmung befestigte Leitung nicht durch die nämliche Ausnehmung.

Die Leitungen können (zumindest im Wesentlichen) parallel zur Anlagefläche befestigt oder befestigbar sein.

Die Vorrichtung kann ferner die Befestigungselemente umfassen. Die in Eingriff gebrachten Befestigungselemente können insofern ein Merkmal der Anlagefläche sein, als die damit befestigten Leitungen am Befestigungselement anliegen.

Die Befestigungselemente können dazu ausgebildet sein, in die Ausnehmungen einzugreifen und die Leitungen parallel zur Anlagefläche zu befestigen. Die Befestigungselemente können schließbare Bänder umfassen. Die Bänder können im offenen Zustand durch mindestens eine Ausnehmung geführt werden. Die Bänder können die zu befestigende Leitung im geschlossenen Zustand umschließen.

Alle oder einzelne Leitungen können punktuell anliegen (beispielsweise nur in räumlicher Zuordnung zu den Befestigungselementen). Alternativ oder ergänzend können die Leitungen entlang der gesamten sich in die Längsrichtung erstreckenden Länge der Anlagefläche anliegen (beispielsweise bis auf Aussparungen in der Anlagefläche).

Die Befestigungselemente können irrreversibel schließbar sein, z. B. durch ineinander greifende Verzahnungen an gegenüberliegenden Enden eines Bands. Die Befestigungselemente können Kabelbinder umfassen. Alternativ oder ergänzend können die Befestigungselemente reversible schließbar sein. Die Befestigungselemente können Klettverschlüsse umfassen. Alternativ oder ergänzend können die Befestigungselemente an einem ersten Ende eine Klammer zur Aufnahme der Leitung und an einem zweiten Ende eine Rastnase zum Eingriff in die Ausnehmung (beispielsweise ein Langloch) umfassen.

Die Befestigungsstellen können direkt oder indirekt (z. B. über einen Halter) mit dem Rahmen verbunden oder verbindbar sein.

Die Ausnehmungen umfassen eine Vielzahl in der Längsrichtung ausgerichtete Langlöcher und/oder Kanten, beispielsweise mit einem Absatz. Der Absatz kann einen formschlüssigen Eingriff des Befestigungselements ermöglichen.

Optional kann jeweils eine Teilmenge der Langlöcher quer zur Längsrichtung durch einen Spalt verbunden sein. Durch den Spalt kann ein Einfädeln eines Befestigungselements, beispielsweise eines Bands, erleichtert sein, indem erst eingefädelt wird und im eingefädelten Zustand das Langloch bestimmt wird, in welches das Befestigungselement eingreift.

Die Leitungen können unterschiedliche Leitungstypen umfassen. Die Leitungen können elektrische Leitungen (beispielsweise Stromleitungen und/oder Signalleitungen) und/oder Fluidleitungen (beispielsweise für Flüssigkeiten oder Gase) umfassen. Beispielsweise können die Leitungen Kabel, Schläuche und/oder Rohre umfassen. Die Fluidleitungen können Hydraulikleitungen (beispielsweise Ölleitungen) oder Pneumatikleitungen (beispielsweise Druckluftleitungen) umfassen. Die Fluidleitungen können zur Steuerung und/oder zur Leistungsübertragung ausgebildet sein (z. B. als Kühlleitung zum Transport von Abwärme oder als Druckleitung für einen hydrostatischen Antrieb). Alternativ oder ergänzend können die Leitungen zur Zuleitung oder Ableitung eines Stoffs ausgebildet sein (z. B. als Kraftstoffleitung).

Die Leitungsführung kann eine Befestigung von sich in einem Nutzfahrzeug erstreckenden Leitungen sein. Die Leitungen können, beispielsweise durch übereinstimmende Befestigungselemente, nach Leitungstyp gruppiert befestigt sein.

Die Vorrichtung kann die Befestigungselemente umfassen. Je ein Befestigungselement kann eine Leitung oder mehrere Leitungen gleichen Leitungstyps umschließen.

Quer zur Längsrichtung kann an der Anlagefläche mindestens eine Abgangsfläche auskragen. An der Abgangsfläche können die Leitungen mittels der Befestigungselemente aus der Längsrichtung herausführbar sein. Jede Abgangsfläche kann in räumlicher Zuordnung zu einem über die Leitungen versorgten Aggregat angeordnet sein.

Die Abgangsfläche kann zumindest abschnittsweise in einer Ebene mit der Anlagefläche angeordnet sein. Die Anlagefläche und die Abgangsfläche können integral einstückig sein.

Die Abgangsfläche kann abseits der Anlagefläche gekrümmt oder geknickt sein. Eine Kante der Abgangsfläche (beispielsweise an einem von der Anlagefläche entfernten Ende der Abgangsfläche) kann gefalzt sein. Alternativ oder ergänzend kann die Abgangsfläche (beispielsweise am entfernten Ende) einen senkrecht zur Anlagefläche stehenden Rand aufweisen.

Die Anlagefläche und/oder die Abgangsfläche können einen Rand umfassen. Der Rand kann sich senkrecht zur Anlagefläche bzw. Abgangsfläche erstrecken. Der Rand der Anlagefläche kann (zumindest abschnittsweise) in der Längsrichtung verlaufen. Der Rand der Abgangsfläche kann (zumindest abschnittsweise) quer zur Längsrichtung verlaufen. Die Verbindungselemente können den Rand der Anlagefläche als Abstandselement umfassen.

Die Leitungen können (beispielsweise in Abschnitten der Leitungsführung entlang der Längsrichtung) umlaufend umschlossen sein, beispielsweise von Anlagefläche, Rand und Rahmen.

Das Nutzfahrzeug kann ein Bus sein. Die Anlagefläche kann mit einem Busgerippe verbunden oder verbindbar sein.

Alternativ kann das Nutzfahrzeug ein Lastkraftwagen sein. Die Anlagefläche kann mit einem Längsrahmen des Lastkraftwagens verbunden oder verbindbar ist. Der Längsrahmen kann ein Leiterrahmen sein.

Die Leitungen können beidseitig der Anlagefläche anliegen oder in Anlage bringbar sein. Dadurch können die Leitungen, beispielsweise getrennt nach Leitungstyp, auf unterschiedlichen Ebenen angeordnet sein.

Die Anlagefläche kann zwei zueinander parallele Längsholme und mehrere sich zwischen den Längsholmen erstreckende Querstege umfassen. Die Querstege können die Ausnehmungen bilden.

Die Leitungen können an den Querstegen anliegen oder in Anlage bringbar sein. Die Ausnehmungen können an den Kanten der Querholme angeordnet sein. Z. B. können die Ausnehmungen Kerben oder zur Kante hin offene Langlöcher sein. Alternativ oder ergänzend können die Ausnehmungen Durchgangsausnehmungen innerhalb der Querholme umfassen.

Die Längsholme und die Querstege können integral einstückig sein. Die Anlagefläche mit den Längsholmen und Querstegen kann aus einem Blech, z. B. durch Laserschneiden, geformt sein. Die Anlagefläche kann fahrzeugspezifisch sein.

Alternativ oder ergänzend kann die Anlagefläche zwei sich in die Längsrichtung erstreckende, zueinander parallele Schienen als Längsholme umfassen. Die Schienen können jeweils mit dem Rahmen verbunden oder verbindbar sein. Die Anlagefläche umfasst ferner mehrere Querstege, die an gegenüberliegenden Enden der Querstege mit den Schienen verschraubt sind.

Die Befestigungselemente können mit den Querstegen verschraubt oder verschraubbar sein. Über die Befestigungselemente können die Leitungen in einer zu den Querstegen beabstandeten Ebene oder einer zusätzlichen Ebene anliegen oder in Anlage bringbar sein.

Die Anlagefläche kann über sich senkrecht zur Anlagefläche erstreckende Verbindungselemente beabstandet zum Rahmen verbunden oder verbindbar sein. Die Verbindungselemente können Schrauben umfassen. Optional können die Befestigungselemente Winkelbleche umfassen, die über Schrauben mit der Anlagefläche und dem Rahmen verbunden oder verbindbar sind.

Die Ausnehmungen können in der Längsrichtung und/oder in der Querrichtung mit einem einheitlichen Abstandsraster angeordnet sein. Ein einheitliches Abstandsraster der Durchgangsausnehmungen kann sich über die gesamte Anlagefläche, ggf. einschließlich der Abgangsfläche, erstrecken.

Gemäß einem weiteren Aspekt ist ein Nutzfahrzeug mit einer solchen Vorrichtung bereitgestellt. Das Nutzfahrzeug kann umfassen: einen Rahmen, beispielsweise ein Fahrgestell oder ein Gerippe; eine mit dem Rahmen verbundene Vorrichtung zur Leitungsführung gemäß dem vorgenannten Aspekt; und mehrere am Rahmen montierte Aggregate, die an durch die Vorrichtung geführte Leitungen angeschlossen sind.

Insbesondere ist ein Bus mit einer solchen Vorrichtung bereitgestellt. Der Bus kann ein Busgerippe und eine mit dem Busgerippe verbundene Vorrichtung gemäß dem erstgenannten Aspekt umfassen.

Ferner betrifft die Erfindung einen Lastkraftwagen mit einer solchen Vorrichtung. Der Lastkraftwagen kann einen Längsrahmen und eine mit dem Längsrahmen verbundene Vorrichtung gemäß dem erstgenannten Aspekt umfassen.

Ein weiterer Aspekt der Erfindung betrifft ein Verfahren zur Montage von Leitungen in einem Nutzfahrzeug mit dem Einbau einer solchen Vorrichtung. Das Verfahren zur Montage von Leitungen an einem Rahmen eines Nutzfahrzeugs umfasst den Schritt des Bereitstellens einer Vorrichtung gemäß dem erstgenannten Aspekt; den Schritt des Befestigens der Leitungen an der Vorrichtung mittels in die Ausnehmungen der Anlagefläche eingreifender Befestigungselemente; und den Schritt des Verbindens der die zuvor befestigten Leitungen umfassenden Vorrichtung mit dem Rahmen.

Ferner betrifft die Erfindung ein Verfahren zur Herstellung einer solchen Vorrichtung. Das Verfahren umfasst den Schritt des Fertigens mindestens einer Anlagefläche gemäß dem erstgenannten Aspekt und den Schritt des Fertigens von Verbindungselementen gemäß dem erstgenannten Aspekt. Die genannten Fertigungsschritte können in einem einzigen Fertigungsschritt ausgeführt werden. Zumindest einer der genannten Fertigungsschritte, oder der einzige Fertigungsschritt, kann ein 3D-Druck-Verfahren umfassen. Das 3D-Druckverfahren kann gemäß einem 3D-Druck-Datensatz ausgeführt werden.

Ein weiterer Aspekt der Erfindung betrifft einen 3D-Druck-Datensatz. Der 3D-Druck-Datensatz umfasst Anweisungen, die bei Abarbeitung durch einen mit einer 3D-DruckVorrichtung verbundenen Prozessor die Fertigung von mindestens einer Anlagefläche und/oder Verbindungselementen gemäß dem erstgenannten Aspekt bewirken. Der 3D-Druck-Datensatz kann auf einem computer-lesbaren Speichermedium oder zum Herunterladen in einem Datennetzwerk, insbesondere dem Internet, bereitgestellt sein.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine schematische räumliche Darstellung eines ersten Ausführungsbeispiels einer Vorrichtung zur Leitungsführung in einem Nutzfahrzeug;
- Figur 2: eine schematische räumliche Darstellung eines zweiten Ausführungsbeispiels der Vorrichtung zur Leitungsführung in einem Nutzfahrzeug;
- Figur 3: ein schematische räumliche Darstellung einer beispielhaften Ausgestaltung einer Ausnehmung;
- Figur 4: eine schematische räumliche Darstellung eines dritten Ausführungsbeispiels der Vorrichtung zur Leitungsführung in einem Nutzfahrzeug; und
- Figur 5: ein schematische räumliche Darstellung einer beispielhaften Ausgestaltung eines beabstandeten Befestigungselements.

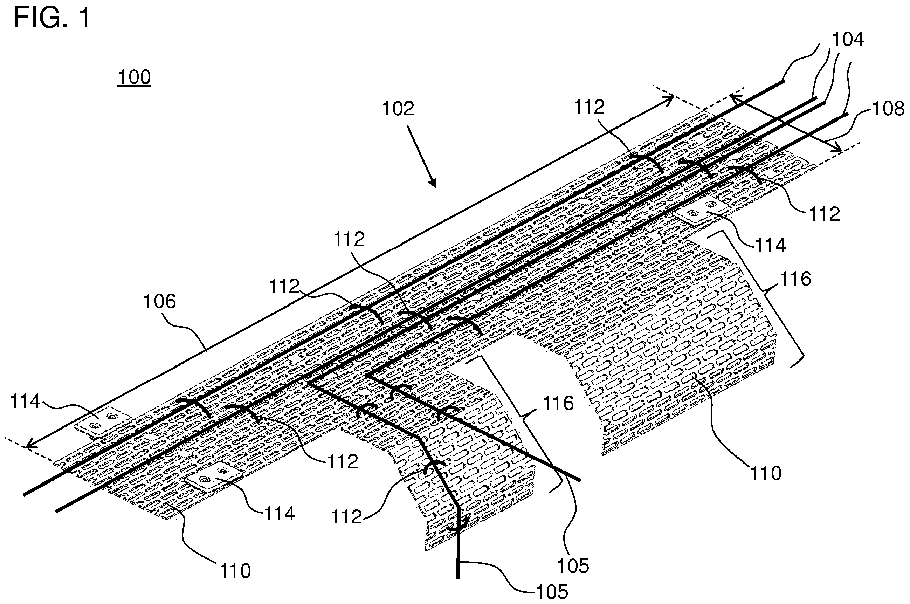

Figur 1 zeigt eine schematische räumliche Darstellung einer allgemein mit Bezugszeichen 100 bezeichneten Vorrichtung zur Leitungsführung in einem Nutzfahrzeug. Die Vorrichtung 100 umfasst eine Anlagefläche 102. Sich in Längsrichtung erstreckende Leitungen 104 liegen im befestigten Zustand an der Anlagefläche 102 an. Ein Längsmaß 106 der Anlagefläche 102 ist in der Längsrichtung größer als ein Quermaß 108 quer zur Längsrichtung (Querrichtung). Die Anlagefläche 102 weist eine Vielzahl von Ausnehmungen 110 auf zur Befestigung der Leitungen 104 parallel zur Anlagefläche 102. Im befestigten Zustand greifen Befestigungselemente 112 in eine Teilmenge der Ausnehmungen 110 ein. Die Anlagefläche 102 ist über Verbindungselemente 114 an mehreren Stellen mit einem Rahmen des Nutzfahrzeugs verbunden oder verbindbar.

Im in Figur 1 gezeigten ersten Ausführungsbeispiel sind die Ausnehmungen 110 Langlöcher in der Anlagefläche 102. Das weite Maß der Langlöcher ist parallel zur Längsrichtung. Das schmale Maß der Langlöcher ist parallel zur Querrichtung.

Optional umfasst die Anlagefläche 102 in der Querrichtung auskragende Abgangsflächen 116. Über die Abgangsflächen 116 sind einzelne der in der Längsrichtung verlaufenden Leitungen 104 als seitlich abgehende Leitung 105 einem Aggregat des Nutzfahrzeugs zugeführt. Dadurch kann die abgehende Leitung 105 in der Querrichtung verlaufen. Auf der Abgangsfläche 116 kann die abgehende Leitung 105 mit den gleichen oder ähnlichen Befestigungselementen 112 wie zur Leitungsführung in der Längsrichtung auf der Anlagefläche 102 befestigt sein.

Ferner können zumindest einzelne Abgangsflächen 116 aus der Querrichtung heraus gekrümmt oder geknickt sein. Dadurch können einzelne abgehende Leitungen 105 aus der durch die Längsrichtung und die Querrichtung definierten Ebene geführt werden, z. B. senkrecht zur Ebene. Die Abgangsfläche 116 kann, wie im ersten Ausführungsbeispiel der Figur 1 schematisch gezeigt, mehrfach geknickt sein, um abgehende Leitungen 105 unter unterschiedlichen Winkeln zu führen.

In jedem Ausführungsbeispiel können alle oder einzelne Abgangsflächen 116 integraleinstückiger Teil der Anlagefläche 102 sein. Alternativ oder ergänzend können alle oder einzelne Abgangsflächen 116 angeschraubt oder durch Umformen oder Bördeln gefügt sein.

Im in Figur 1 gezeigten ersten Ausführungsbeispiel umfassen die Verbindungselemente 114 Abstandselemente (z. B. Beilagscheiben) und in einzelnen Ausnehmungen 110 angeordnete Schrauben, die mit dem Rahmen des Nutzfahrzeugs verschraubt oder verschraubbar sind. Durch die Dicke der zwischen Anlagefläche 102 und Rahmen angeordneten Abstandselemente kann eine Raumhöhe definiert sein, in welcher die Leitungen geführt sind.

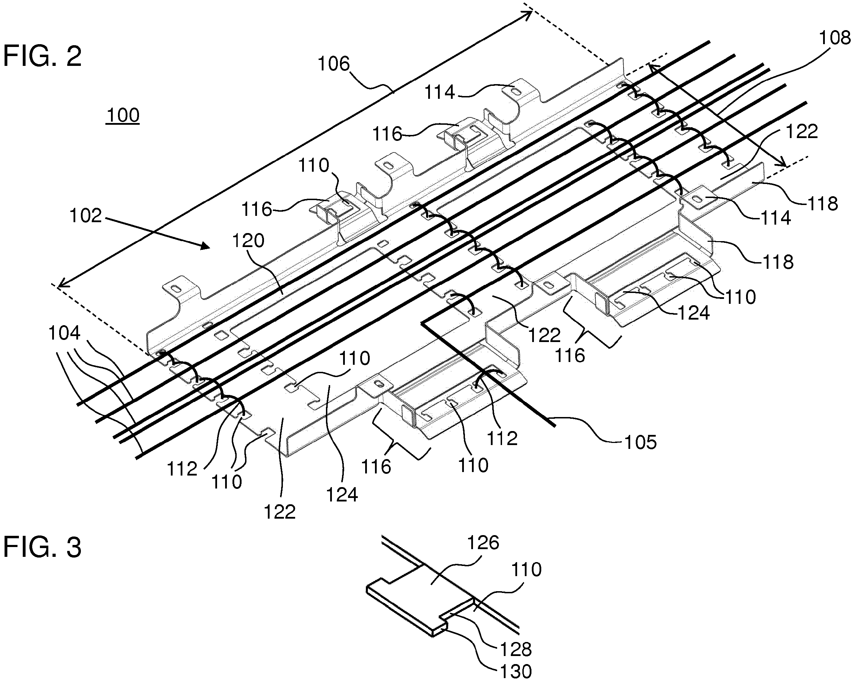

Figur 2 zeigt eine schematische räumliche Darstellung eines zweiten Ausführungsbeispiels der Vorrichtung 100. Übereinstimmende oder austauschbare Merkmale sind mit gleichen Bezugszeichen versehen. Insbesondere kann ein weiteres Ausführungsbeispiel der Vorrichtung 100 die Ausnehmungen 110 und/oder die Verbindungselemente 114 jeweils entsprechend dem ersten Ausführungsbeispiel und/oder dem zweiten Ausführungsbeispiel ausbilden.

Beim in Figur 2 gezeigten zweiten Ausführungsbeispiel der Vorrichtung 100 erstreckt sind ein senkrecht zur Anlagefläche 102 stehender Rand 118 in der Längsrichtung beiderseits der Anlagefläche 102. Optional erstreckt sich ferner ein zur Abgangsfläche 116 senkrecht stehender Rand 118 in der Querrichtung beiderseits der Abgangsfläche 116. Der Rand 118 kann durch Abkanten aus der Anlagefläche 102 bzw. der Abgangsfläche 116 gefertigt sein. Der Rand 118 kann die Steifigkeit in der Längsrichtung bzw. der Querrichtung erhöhen.

Die Anlagefläche 102, die Abgangsflächen 116 und deren Ränder 118 können aus Stahl, Aluminium und/oder Kunststoffen gefertigt sein.

Die Abgangsflächen 116 können durch Umformen mit der Anlagefläche 102 verbunden sein. Im zweiten Ausführungsbeispiel sind die Anlagefläche 102 und die Abgangsfläche 116 durch Umformen der Ränder 118 über ihre Ränder 118 (beispielsweise formschlüssig oder stoffschlüssig) verbunden.

Die Verbindungselemente 114 sind am Rand 118 der Anlagefläche 102 angeformt. Dadurch dient der Rand 118 als Abstandselement für das Verbindungselement 114 zum Rahmen.

Die Anlagefläche 102 des zweiten Ausführungsbeispiels der Vorrichtung 100 umfasst zwei parallele Längsholme 120 in der Längsrichtung. Beispielsweise ist der Rand 118 der Anlagefläche 102 an den Längsholm angeformt. Zwischen den Längsholmen 120 verlaufen zueinander beabstandet Querstege 122 in der Querrichtung. Die Ausnehmungen 110 zur Befestigung der Leitungen 104 sind in die Querstege 122 eingebracht. Die Leitungen 104 liegen an den Querstegen 122 an.

Durch Öffnungen 124 sind jeweils mehrere Ausnehmungen 110 verbunden. Dadurch kann das Befestigungselement 112 ohne Rücksicht auf eine einzelne Ausnehmung 110 durch die Öffnung 124 geführt werden und anschließend an einer bestimmten Ausnehmung 110 in Eingriff gebracht werden. Beispielsweise kann das Befestigungselement 112 zunächst um die Leitung oder Leitungen 104 geschlossen werden, die Leitung oder Leitungen 104 an der Anlagefläche 102 in Anlage gebracht werden, und das Befestigungselement 112 in der Ausnehmung 110 in Eingriff kommen. Die Öffnung 124 kann ein Spalt (beispielsweise in der Abgangsfläche 116) oder ein Zwischenraum zwischen den Querstegen 122 (beispielsweise in der Anlagefläche 102) sein.

Figur 3 zeigt eine Weiterbildung der Ausnehmung 110. Die Ausnehmung 110 wird durch eine sich in der Längsrichtung erstreckende Kante 128 mit einem Absatz 130 in der Querrichtung gebildet. Beispielsweise kragen beidseitig an den Querstegen 122 in der Längsrichtung Rastnasen 126 aus. Jede Rastnase 126 umfasst jeweils zwei gegenüberliegende Kanten 128 mit dem Absatz 130. Die Ausnehmung 110 ist zwischen benachbarten Rastnasen 126 angeordnet.

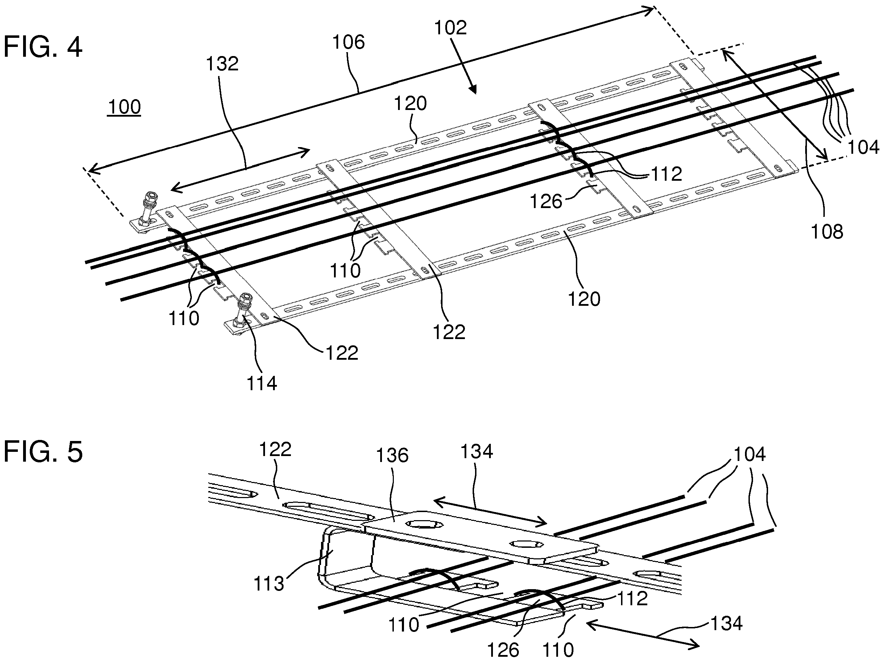

Figur 4 zeigt eine schematische räumliche Darstellung eines dritten Ausführungsbeispiels der Vorrichtung 100. Übereinstimmende oder austauschbare Merkmale sind mit gleichen Bezugszeichen versehen. Insbesondere kann ein weiteres Ausführungsbeispiel der Vorrichtung 100 die Querstege 122 jeweils entsprechend dem zweiten Ausführungsbeispiel und/oder dem dritten Ausführungsbeispiel ausbilden.

Die Längsholme 120 sind Schienen mit periodisch beabstandeten Löchern zur Verschraubung der Querstege 122, an deren Enden entsprechende Löcher vorgesehen sind. Vorzugsweise sind die Löcher in den Schienen 120 und den Querstegen 122 Langlöcher. Beispielsweise ist das weite Maß der Langlöcher in den Schienen 120 in der Längsrichtung und in den Querstegen 122 in der Querrichtung.

Durch die wählbare Längsposition 132 ist eine hohe Flexibilität, beispielsweise in Anpassung an das jeweilige Nutzfahrzeug, bei einer Vormontage der Vorrichtung 100 ermöglicht.

Die Verbindungselemente 114 umfassen Schrauben, die durch ihre Länge als Abstandselement dienen. Optional ist entlang einer Teillänge des Schraubenschaftes der Schraube eine Abstandshülse angeordnet. Die Schrauben verbinden die Schienen 120 mit dem Rahmen durch einzelne der Löcher in den Schienen 120.

Figur 5 zeigt ein beabstandetes Befestigungselements 113 als Ergänzung des Befestigungselements 112. Durch das beabstandete Befestigungselement 113 können zusätzliche Leitungen 104 oder alle Leitungen 104 in einer zu den Schienen 120 parallel versetzten Ebene geführt sein. Dadurch kann auf die Abstandselemente bei den Verbindungselementen 114 verzichtet werden. Ferner bleibt die Querposition 134 für die Befestigung der Leitungen 104 wählbar, beispielsweise bei der Vormontage der Vorrichtung.

Das beabstandete Befestigungselement 113 kann als U-Element ausbildet sein. Eine erste Flanke des beabstandeten Befestigungselements 113 ist durch zusätzliche Langlöchern im Quersteg 122 mit diesem verschraubt. Optional sind gegenüberliegend am Quersteg 122 an den Verschraubungsstellen Beilagscheiben 136 angeordnet. An einer der ersten Flanke parallel gegenüberliegenden zweiten Flanke liegen die Leitungen 104 an. In der in Figur 5 gezeigten Ausführung kragen an der zweiten Flanke Rastnasen 126 aus, beispielsweise ähnlich den in den Figuren 2 und 4 gezeigten Querstegen 122. Alternativ oder ergänzend können in der zweiten Flanke Löcher zum Eingriff der Befestigungselemente 112 vorgesehen sein.

Die Vorrichtung 100 kann auch als Leitungsschacht bezeichnet werden. Beispielsweise können im am Rahmen verbundenen Zustand der Vorrichtung 100 die Anlagefläche 102, deren Rand 118 und der Rahmen die Seitenflächen des Leitungsschachts bilden.

Die Erfindung ermöglicht bereits in der Fahrzeugkonzipierung des Nutzfahrzeugs den Raum für die Leitungsführung zu berücksichtigen und dadurch eine gezielte und aufgeräumte Führung der Leitungen 104 durch das Nutzfahrzeug zu erreichen.

Die Vorrichtung 100 kann über weite Strecken der Leitungsführung vormontiert werden und mit den befestigten Leitungen 104 im Nutzfahrzeug montiert werden oder in Segmente aufgeteilt montiert werden. Insbesondere können modular einige Segmentvarianten im Rahmen (beispielsweise am Fahrgestell) des Nutzfahrzeugs angeordnet sein, um die Fahrzeugvarianz abzubilden.

Die Vorrichtung 100 kann mittels der Verbindungselemente 114 am Rahmen des Nutzfahrzeugs, insbesondere am Leiterrahmen oder an einer Gerippestruktur (beispielsweise eines Busses), befestigt sein. Die Leitungen 104 können evtl. vormontiert werden und komplett innerhalb eines Montageschrittes eingebracht und mit den Aggregaten verbunden werden.

Im einfachsten Fall, und damit die modularste Lösung, ist die Anlagefläche 102 ein Blech oder Lochblechbaugruppe mit Lochblechstruktur, beispielsweise gemäß dem ersten Ausführungsbeispiel der Figur 1. Die Anlagefläche 102 umfasst die Verbindungselemente 114 als Halterungsmöglichkeiten an Anbindungspunkte des Rahmens (beispielsweise des Gerippes). In jedem Ausführungsbeispiel können die Verbindungselemente 114 angeschraubte oder aus dem Material der Anlagefläche 102 gebogene Laschen umfassen.

In einer Weiterbildung, beispielsweise gemäß dem zweiten Ausführungsbeispiel der Figur 2, ist die Vorrichtung 100 auf das Nutzfahrzeug speziell angepasst. Beispielsweise ist die Geometrie der Anlagefläche 102 und/oder der Abgangsflächen 116 fahrzeugspezifisch für eine optimale Leitungsführung einschließlich der Abgänge zu den Aggregaten. Die Anlagefläche 102 und/oder die Abgangsflächen 116 können durch Laserschneiden eines Blechs gefertigt sein.

Vorzugsweise erfolgt die Befestigung der Leitungen 104, welche Rohre und/oder Kabel umfassen können, an der Lochblechstruktur des ersten Ausführungsbeispiels mit Schnappelementen als Befestigungselemente 112, da ein Einfädeln eines Kabelbinders als Befestigungselement 112 umständlicher ist.

Beim zweiten Ausführungsbeispiel können an den Querstegen 122 die Rastnasen 126 ausgeschnitten (beispielsweise durch Laserschneiden) sein. Die offene Kontur der Kanten 128 und Absätze 130 ermöglicht eine einfaches und schnelles Einführen und Festziehen, z. B. eines Kabelbinders oder eines Klettverschlusses. Die großen Öffnungen 124 dienen der Gewichtsreduzierung.

Durch das Kanten der Bleche, beispielsweise durch den Rand 118 oder die Knicke in der Abgangsfläche 116 wird ein Schutz der Leitungen erreicht, aber auch die Anlagefläche 102 und die Abgangsfläche 116 versteift.

Das dritte Ausführungsbeispiel erreicht eine weitere Modularisierung und kann auch als Schienenwerk bezeichnet werden. Die Schienen 120 (die auch als Leitelemente bezeichnet werden können) sind Normteile, welche über die Verbindungselemente 114 am Fahrzeug befestigt werden. Die Querstege 122 (die auch als Rasterelemente bezeichnet werden können) werden modular nach Bedarf und in dem jeweils erforderlichen Abstand an den Schienen 120 angeschraubt. Die Leitungen 104 werden an den Querstegen 122 mittels der Befestigungselemente 112 (beispielsweise Kabelbinder, Klettverschlüsse, Spannbändern und/oder Gummibänder) fixiert.

Auch die Anbindung am Rahmen erfolgt mit Schraubelementen als Verbindungselemente 114, deren Positionen durch die Löcher der Schienen 120 wählbar sind.

Mit dem beabstandeten Befestigungselement 113 in Figur 5 könne die Leitungen 104 hängend und durch die U-Form geschützt befestigt werden. Ferner können die Leitungen 104 in Gruppen durch wenige Verschraubungen von den Schienen 120 und somit vom Rahmen gelöst werden. Dadurch können die Leitungen 104 zur schnelleren Montage und bei Wartungsarbeiten gruppiert bleiben.

Die Bleche, aus denen die Anlagefläche 102, die Abgangsfläche 116 und deren Ränder 118 gebildet sind, können durch Laserschneiden, Stanzen oder Biegen gefertigt sein. Die Abgangsflächen 116 können durch Punktschweißen oder Kleben mit der Anlagefläche verbunden sein.

Das Lochblech als Anlagefläche 102 und Abgangsflächen 116 des ersten Ausführungsbeispiels kann aus einem Lochblech zugeschnitten und gebogen sein. Die Verbindungselemente 114 werden angeschraubt. Die Befestigung der Leitungen 104 erfolgt mit Schnappelementen, Kabelbindern, etc.

Die Anlagefläche 102 und die Abgangsflächen 116 des zweiten Ausführungsbeispiels sind angepasste Segmente für bestimmte Bereiche im Nutzfahrzeug. Durch die Rastnasen 126 ist ein handliches Befestigen der Leitungen 104 mittels Kabelbinder oder einem Spannband möglich.

Das modulare Schienenwerk des dritten Ausführungsbeispiels umfasst Normbauteile, die eine kostengünstige und hoch flexible Befestigung der Leitungen 104 ermöglichen. Die Anbindungspunkte und Rasterelemente können in geringen Abständen verschoben werden.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Vorrichtung zur Leitungsführung
- 102: Anlagefläche
- 104: Leitung
- 105: Abgehende Leitung
- 106: Längsmaß
- 108: Quermaß
- 110: Ausnehmung
- 112: Befestigungselement
- 113: Beabstandetes Befestigungselement
- 114: Verbindungselement
- 116: Abgangsfläche
- 118: Rand
- 120: Längsholm
- 122: Quersteg
- 124: Öffnung
- 126: Rastnase
- 128: Kante
- 130: Absatz
- 132: Wählbare Längsposition
- 134: Wählbare Querposition
- 136: Beilagscheibe

## Patentansprüche

1. Vorrichtung (100) zur Leitungsführung für ein Nutzfahrzeug, umfassend:
mindestens eine Anlagefläche (102), an der sich in Längsrichtung erstreckende Leitungen (104) anliegen oder in Anlage bringbar sind, wobei ein Längsmaß (106) der Anlagefläche (102) in der Längsrichtung größer ist als ein Quermaß (108) der Anlagefläche (102) quer zur Längsrichtung, und wobei die Anlagefläche (102) eine Vielzahl von Ausnehmungen (110) aufweist zur Befestigung der Leitungen (104) an der Anlagefläche (102) mittels in eine Teilmenge der Ausnehmungen (110) eingreifender Befestigungselemente (112; 113), wobei die Anlagefläche (102) zwei zueinander parallele Längsholme (120) und mehrere sich zwischen den Längsholmen (120) erstreckende Querstege (122) umfasst, welche die Ausnehmungen (110) aufweisen, wobei die Ausnehmungen (110) eine Vielzahl in die Längsrichtung ausgerichteter Kanten (128) mit einem Absatz (130) quer zu der Längsrichtung umfassen, der einen formschlüssigen Eingriff des Befestigungselements ermöglicht; und
Verbindungselemente (114), über welche die Vorrichtung (100) an mehreren Stellen zumindest mit einem Abschnitt eines Rahmens des Nutzfahrzeugs verbunden oder verbindbar ist.

2. Vorrichtung nach Anspruch 1, wobei die Leitungen (104) im Wesentlichen parallel zur Anlagefläche (104) befestigt oder befestigbar sind.

3. Vorrichtung nach Anspruch 1 oder 2, wobei die Leitungen (104) unterschiedliche Leitungstypen umfassen.

4. Vorrichtung nach Anspruch 3, ferner die Befestigungselemente (112; 113) umfassend, wobei ein Befestigungselement (112) mehrere Leitungen (104) gleichen Leitungstyps umschließt.

5. Vorrichtung nach einem der Ansprüche 1 bis 4, wobei quer zur Längsrichtung mindestens eine Abgangsfläche (116) auskragt, an welcher die Leitungen (104) mittels der Befestigungselemente (112) aus der Längsrichtung herausführbar sind.

6. Vorrichtung nach einem der Ansprüche 1 bis 5, wobei die Anlagefläche (102) und/oder die Abgangsfläche (116), einen Rand (118) umfasst, der sich senkrecht zur Anlagefläche (102) bzw. Abgangsfläche (116) erstreckt.

7. Vorrichtung nach einem der Ansprüche 1 bis 6, wobei die Leitungen (104) beidseitig der Anlagefläche (102) anliegen oder in Anlage bringbar sind.

8. Vorrichtung nach einem der Ansprüche 1 bis 7, wobei die Anlagefläche (102) zwei sich in die Längsrichtung erstreckende, zueinander parallele Schienen (120), die mit dem Rahmen verbunden oder verbindbar sind, und mehrere Querstege (122) umfasst, die an gegenüberliegenden Enden mit den Schienen (120) verschraubt sind.

9. Vorrichtung nach einem der Ansprüche 1 bis 8, ferner die Befestigungselemente (112, 113) umfassend, wobei die Befestigungselemente (112, 113) mit den Querstegen (122) verschraubt oder verschraubbar sind und die Leitungen (104) in einer zu den Querstegen (122) beabstandeten Ebene anliegen oder in Anlage bringbar sind.

10. Vorrichtung nach einem der Ansprüche 1 bis 9, wobei die Anlagefläche (102) über sich senkrecht zur Anlagefläche (102) erstreckende Verbindungselemente (114) beabstandet zum Rahmen verbunden oder verbindbar ist.

11. Vorrichtung nach einem der Ansprüche 1 bis 10, wobei die Ausnehmungen (110) in der Längsrichtung und/oder der Querrichtung mit einem einheitlichen Abstandsraster angeordnet sind.

12. Nutzfahrzeug, insbesondere ein Bus, umfassend ein Gerippe und eine mit dem Gerippe verbundene Vorrichtung nach einem der Ansprüche 1 bis 11.

13. Nutzfahrzeug, insbesondere ein Lastkraftwagen, umfassend einen Längsrahmen und eine mit dem Längsrahmen verbundene Vorrichtung nach einem der Ansprüche 1 bis 11.

14. Verfahren zur Montage von Leitungen (104) an einem Rahmen eines Nutzfahrzeugs, umfassend:
Bereitstellen einer Vorrichtung (100) nach einem der Ansprüche 1 bis 11;
Befestigen der Leitungen (104) an der Vorrichtung (100) mittels in die Ausnehmungen (110) der Anlagefläche (102) eingreifender Befestigungselemente (112; 113); und
Verbinden der die zuvor befestigten Leitungen (104) umfassenden Vorrichtung (100) mit dem Rahmen.

## Claims

1. An apparatus (100) for cable routing for a utility vehicle, comprising:
at least one bearing face (102), against which lines (104) which extend in the longitudinal direction bear or can be brought to bear, a longitudinal dimension (106) of the bearing face (102) in the longitudinal direction being greater than a transverse dimension (108) of the bearing face (102) transversely with respect to the longitudinal direction, and the bearing face (102) having a multiplicity of recesses (110) for fastening the lines (104) to the bearing face (102) by means of fastening elements (112; 113) which engage into a part quantity of the recesses (110), the bearing face (102) comprising two longitudinal beams (120) which are parallel to one another and a plurality of transverse webs (122) which extend between the longitudinal beams (120) and have the recesses (110), the recesses (110) comprising a multiplicity of edges (128) which are oriented in the longitudinal direction with a step (130) transversely with respect to the longitudinal direction, which step (130) makes a positively locking engagement of the fastening element possible; and
connecting elements (114), via which the apparatus (100) is connected or can be connected at a plurality of points to a section of a frame of the utility vehicle.

2. The apparatus according to Claim 1, the lines (104) being fastened or being capable of being fastened substantially parallel to the bearing face (104).

3. The apparatus according to Claim 1 or 2, the lines (104) comprising different line types.

4. The apparatus according to Claim 3, comprising, furthermore, the fastening elements (112; 113), a fastening element (112) enclosing a plurality of lines (104) of the same line type.

5. The apparatus according to one of Claims 1 to 4, at least one outlet face (116) projecting transversely with respect to the longitudinal direction, at which outlet face (116) the lines (104) can be guided out of the longitudinal direction by means of the fastening elements (112).

6. The apparatus according to one of Claims 1 to 5, the bearing face (102) and/or the outlet face (116) comprising an edge (118) which extends perpendicularly with respect to the bearing face (102) and/or outlet face (116).

7. The apparatus according to one of Claims 1 to 6, the lines (104) bearing or being capable of bearing on both sides of the bearing face (102).

8. The apparatus according to one of Claims 1 to 7, the bearing face (102) comprising two rails (120), which extend in the longitudinal direction, are parallel to one another and are connected or can be connected to the frame, and a plurality of transverse webs (122) which are screwed at opposite ends to the rails (120).

9. The apparatus according to one of Claims 1 to 8, comprising, furthermore, the fastening elements (112, 113), the fastening elements (112, 113) being screwed or being capable of being screwed to the transverse webs (122), and the lines (104) bearing or being capable of bearing in a plane which is spaced apart from the transverse webs (122).

10. The apparatus according to one of Claims 1 to 9, the bearing face (102) being connected or being capable of being connected in a manner which is spaced apart from the frame via connecting elements (114) which extend perpendicularly with respect to the bearing face (102).

11. The apparatus according to one of Claims 1 to 10, the recesses (110) being arranged with a uniform spacing pattern in the longitudinal direction and/or the transverse direction.

12. A utility vehicle, in particular a bus, comprising a framework and an apparatus according to one of Claims 1 to 11 which is connected to the framework.

13. A utility vehicle, in particular a lorry, comprising a longitudinal frame and an apparatus according to one of Claims 1 to 11 which is connected to the longitudinal frame.

14. A method for mounting lines (104) on a frame of a utility vehicle, comprising:
providing of an apparatus (100) according to one of Claims 1 to 11;
fastening of the lines (104) to the apparatus (100) by means of fastening elements (112; 113) which engage into the recesses (110) of the bearing face (102); and
connecting of the apparatus (100) which comprises the previously fastened lines (104) to the frame.

## Revendications

1. Dispositif (100) de guidage de lignes d'un véhicule utilitaire, ledit dispositif comprenant :
au moins une surface d'appui (102) sur laquelle viennent ou peuvent venir en appui des lignes (104) qui s'étendent dans la direction longitudinale, une dimension longitudinale (106) de la surface d'appui (102) dans la direction longitudinale étant supérieure à une dimension transversale (108) de la surface d'appui (102) transversalement à la direction longitudinale, et la surface d'appui (102) comportant une multitude d'évidements (110) destinés à fixer les lignes (104) à la surface d'appui (102) au moyen d'éléments de fixation (112 ; 113) qui s'engagent dans un sous-ensemble d'évidements (110), la surface d'appui (102) comprenant deux longerons longitudinaux (120) parallèles l'un à l'autre et une pluralité de nervures transversales (122) qui s'étendent entre les longerons (120) et qui comportent les évidements (110), les évidements (110) comportant une pluralité de bords orientés dans la direction longitudinale (128) et comportant transversal à la direction longitudinale un épaulement (130) qui permet un engagement par complémentarité de formes de l'élément de fixation ; et
des éléments de liaison (114) permettant de relier ou de pouvoir relier le dispositif (100) à au moins une portion d'un cadre du véhicule utilitaire en une pluralité de points.

2. Dispositif selon la revendication 1, les lignes (104) étant fixées ou pouvant être fixées sensiblement parallèlement à la surface d'appui (104).

3. Dispositif selon la revendication 1 ou 2, les lignes (104) comprenant différents types de lignes.

4. Dispositif selon la revendication 3, comprenant en outre les éléments de fixation (112 ; 113), un élément de fixation (112) renfermant une pluralité de lignes (104) du même type de ligne.

5. Dispositif selon l'une des revendications 1 à 4, au moins une surface de sortie (116), sur laquelle les lignes (104) peuvent être écartées de la direction longitudinale au moyen des éléments de fixation (112), faisant saillie transversalement à la direction longitudinale.

6. Dispositif selon l'une des revendications 1 à 5, la surface d'appui (102) et/ou la surface de sortie (116) comprenant un bord (118) qui s'étend perpendiculairement à la surface d'appui (102) ou la surface de sortie (116).

7. Dispositif selon l'une des revendications 1 à 6, les lignes (104) venant ou pouvant venir en appui de part et d'autre de la surface d'appui (102).

8. Dispositif selon l'une des revendications 1 à 7, la surface d'appui (102) comprenant deux rails (120), parallèles l'un à l'autre, qui s'étendent dans la direction longitudinale et qui sont ou peuvent être reliés au cadre, et une pluralité de transverses (122) qui sont vissées aux rails (120) à des extrémités opposées.

9. Dispositif selon l'une des revendications 1 à 8, comprenant en outre les éléments de fixation (112, 113), les éléments de fixation (112, 113) étant ou pouvant être vissés aux traverses (122) et les lignes (104) venant ou pouvant venir en appui sur un plan distant des traverses (122).

10. Dispositif selon l'une des revendications 1 à 9, la surface d'appui (102) étant ou pouvant être reliée à distance du cadre par le biais d'éléments de liaison (114) s'étendant perpendiculairement à la surface d'appui (102).

11. Dispositif selon l'une des revendications 1 à 10, les évidements (110) étant disposés dans la direction longitudinale et/ou dans la direction transversale avec une trame d'écartement uniforme.

12. Véhicule utilitaire, en particulier un bus, comprenant un châssis et un dispositif selon l'une des revendications 1 à 11 relié au châssis.

13. Véhicule utilitaire, en particulier camion, comprenant un cadre longitudinal et un dispositif selon l'une des revendications 1 à 11 relié au cadre longitudinal.

14. Procédé de montage de lignes (104) sur un cadre d'un véhicule utilitaire, ledit procédé comprenant les opérations suivantes :
- fournir un dispositif (100) selon l'une des revendications 1 à 11 ;
- fixer les lignes (104) au dispositif (100) au moyen d'éléments de fixation (112 ; 113) qui s'engagent dans les évidements (110) de la surface d'appui (102) ; et
- relier au cadre le dispositif (100) comprenant les lignes (104) préalablement fixées.
